# EUROPEAN PATENT APPLICATION

(11) **EP 2 891 807 A1**
(43) Date of publication of application: **08.07.2015**
(21) Application number: 13832895.0
(22) Date of filing: 26.08.2013
(51) Int. Cl.: F16B 21/16, B21B 35/14, F16B 1/02, F16B 7/00, F16B 23/00

(54) **LOCK PIN, LOCK PIN ROTATING TOOL, AND CONNECTION RELEASING STRUCTURE**

(30) Priority: 31.08.2012 JP 2012192052; 09.07.2013 JP 2013143413
(71) Applicant: JTEKT Corporation, Osaka-shi, Osaka 542-8502 (JP)
(72) Inventor: KOMEYAMA, Nobuo, Osaka-shi Osaka 542-8502 (JP)
(74) Representative: Winter, Brandl, Fürniss, Hübner, Röss, Kaiser, Polte - Partnerschaft mbB
(86) International application number: PCT/JP2013/072684
(87) International publication number: WO 2014/034593

(57) **Abstract**

A lock pin 3 is provided with a head part 31, a shaft 32, and an engaging projection 33. The engaging projection 33 includes a rotation direction engaging part 50 which is continued from the head part 31, and which can be engaged in a rotation direction, and an engaging flange part 51 which can be engaged in an axial direction.

## Description

### Technical Field

The present invention relates to a lock pin, a lock pin rotating tool, and a connection releasing structure. More particularly, the invention relates to the lock pin which can be favorably used in a connecting structure for connecting, for example, a rolling roll of a rolling mill to a coupling which is connected to a drive shaft, the lock pin rotating tool, and the connection releasing structure.

### Background Art

Conventionally, as an example of the lock pin, there has been a lock pin which is used in a connecting structure disclosed in JP-A-H02-229607 (Patent Document 1). This lock pin is used for connecting a roll of a rolling mill to a coupling which is fitted to a drive shaft. This lock pin has a cutout in a form of a recess in a center part in an axial direction.

This lock pin is inserted into a lock pin inserting hole in the coupling, in a state where the cutout is directed to a roll neck engaging hole in the coupling. Then, in this state, a roll neck part is inserted into the roll neck engaging hole in the coupling. Thereafter, by rotating the lock pin, a peripheral part of the lock pin is engaged with an engaging groove of the roll neck part, thereby to restrict movement of the roll neck part in the axial direction.

Moreover, for the purpose of reliably preventing the movement of the roll neck part in the axial direction, rotation restriction of the lock pin is performed, in a state where the peripheral part of the lock pin is engaged with the engaging groove of the roll neck part. This rotation restriction is performed by forming a projection on a head part of a bolt of the lock pin, and by engaging this projection with a recess which is formed in the coupling corresponding to the projection. The rotation restriction will not be released, because the projection is always urged toward the recess by an urging member. Moreover, a nut is screwed on a tip end of the lock pin.

By the way, in the above described conventional lock pin, when the engagement of the lock pin is to be released, an operator at a side of the nut on the tip end of the lock pin presses a shaft of the lock pin toward the head part of the lock pin so as to overcome an urging force of the urging member thereby to detach the projection from the recess. In this state, another operator at a side of the head part of the lock pin rotates the lock pin with a wrench or the like thereby to release the engagement of the lock pin.

However, in the above described conventional lock pin, there is such a problem that it requires a number of working steps, because the two operators are required for rotating the lock pin, at opposite ends, namely, at the side of the nut on the tip end of the lock pin, and at the side of the head part.

### Prior Art Document

### Patent Document

Patent Document 1: JP-A-H02-229607

### Summary of the Invention

### Problems that the Invention is to Solve

In view of the above, an object of the invention is to provide a lock pin, a lock pin rotating tool, and a connection releasing structure for allowing only one operator to release engagement thereby to reduce the number of working steps.

### Means for Solving the Problems

In order to solve the above described problem, there is provided according to the invention, a lock pin comprising: a head part; a shaft which is continued from the head part, and which has a cutout part and a screw part which is positioned at a tip end side forward of the cutout part; and an engaging projection which is continued from the head part at an opposite side to the screw part, characterized in that the engaging projection has: a rotation direction engaging part which is connected to the head part, and which can be engaged in a rotation direction; and an engaging flange part which is connected to the rotation direction engaging part, and which can be engaged in an axial direction.

According to the invention, the engaging projection which is continued from the head part has the rotation direction engaging part which can be engaged in the rotation direction, and the engaging flange part which can be engaged in the axial direction. Therefore, it is possible to prepare a tool having a rotation force applying part which can be engaged with the rotation direction engaging part in the rotation direction, and an axial force applying part which can be engaged with the engaging flange part in the axial direction. Then, it is possible to engage the axial force applying part with the engaging flange in the axial direction, and at the same time, to engage the rotation force applying part with the rotation direction engaging part. Therefore, after a force is applied from the tool to the lock pin in the axial direction so that a frictional force may not work between the head part and the lock pin inserting member, a rotation force (torque) can be applied from the tool to the lock pin thereby to rotate the lock pin. As the results, it is possible to rotate the lock pin by only one operator, and hence, the number of working steps for engagement using the lock pin can be reduced.

Moreover, in one embodiment, the engaging flange part has a first side face and a second side face which are substantially parallel to each other. The rotation direction engaging part is positioned within a region where the engaging flange part passes, when the engaging flange part is moved in the axial direction toward the shaft, and has a first side face and a second side face which are substantially parallel to each other, and separated from each other by a distance substantially equal to a distance between the first and second side faces of the engaging flange part. Moreover, a sectional plane of the rotation direction engaging part taken along a plane perpendicular to the axial direction is smaller than a sectional plane of the engaging flange part taken along a plane perpendicular to the axial direction.

According to the above described embodiment, as the tool for rotating the lock pin, it is possible to employ a tool having a first hole which has a sectional plane substantially corresponding to the end face in the axial direction of the engaging flange part, and the engaging flange part can pass through, and a second hole which has an inner peripheral face continued from an inner peripheral face of the first hole, via a step part extending outward in a radial direction from the inner peripheral face of the first hole. The second hole has a sectional plane which is larger than the sectional plane of the first hole, and a length of the first hole is smaller than a thickness in the axial direction of the rotation direction engaging part.

Specifically, by arranging two side faces of the first hole corresponding to the first side face and the second side face of the engaging flange part so as to clamp the first side face and the second side face, the tool can be engaged with the rotation direction engaging part so as not to relatively move in the rotation direction with respect to each other. Moreover, by pulling the tool in this state, it is possible to frictionally engage, in the axial direction, at least a part of the step part with at least a part of the end face of the engaging flange part at a side of the rotation direction engaging part in the axial direction, and further, to make the head part of the lock pin so as not to be contacted with the lock pin inserting member. In this manner, the lock pin can be smoothly rotated. According to this embodiment, it is possible to form the lock pin which can be rotated by only one operator, thus reducing the number of working steps, in a simple structure.

Moreover, in another embodiment, the engaging flange part has a substantially oblong shape, while the rotation direction engaging part has a sectional shape of parallelogram in which four edges have substantially equal length. A position of one of four corners of the rotation direction engaging part in the rotation direction substantially coincides with a position of a center of the first side face of the engaging flange part in the rotation direction, and a position of another one of the four corners of the rotation direction engaging part in the rotation direction substantially coincides with a position of a center of the second side face of the engaging flange part in the rotation direction.

According to the above described embodiment, it is possible to enlarge a region where the step part of the tool is frictionally engaged with the end face of the engaging flange part at the side of the rotation direction engaging part in the axial direction. In this manner, the engagement in the axial direction can be reliably performed.

Further, the lock pin rotating tool for rotating the lock pin according to the invention is characterized by comprising: a body part; and a torque applying part for rotating the body part in the rotation direction, wherein the body part has: a first hole which has a sectional plane substantially corresponding to an end face in the axial direction of the engaging flange part, and through which the engaging flange part can pass; and a second hole which has an inner peripheral face continued from an inner peripheral face of the first hole, via a step part extending outward in a radial direction from the inner peripheral face of the first hole, the second hole having a sectional plane which is larger than the sectional plane of the first hole, and a length of the first hole is smaller than a thickness in the axial direction of the rotation direction engaging part.

According to this invention, by arranging the lock pin rotating tool in such a manner that the side face of the engaging flange part and the side face of the first hole corresponding to the side face of the engaging flange part are opposed to each other, it is possible to engage the tool with the rotation direction engaging part so as not to relatively move with respect to each other. Then, by pulling the tool in this state, it is possible to frictionally engage, in the axial direction, at least a part of the step part with at least a part of the end face of the engaging flange part at the side of the rotation direction engaging part in the axial direction, and at the same time, it is possible to pull up the lock pin. Accordingly, it is possible to make the head part of the lock pin so as not to be contacted with the lock pin inserting member, and to smoothly rotate the lock pin. In the one embodiment, rotation restriction of the lock pin can be released. Therefore, it is possible to rotate the lock pin by only one operator, and hence, the number of working steps can be reduced.

Further, a connection releasing structure according to the invention comprises: the lock pin according to the invention; and the lock pin rotating tool for rotating the lock pin. The lock pin rotating tool includes: a body part; and a torque applying part for rotating the body part in the rotation direction, the body part has: a first hole which has a sectional plane substantially corresponding to an end face in the axial direction of the engaging flange part, and through which the engaging flange part can pass; and a second hole which has an inner peripheral face continued from an inner peripheral face of the first hole, via a step part extending outward in a radial direction from the inner peripheral face of the first hole, the second hole having a sectional plane which is larger than the sectional plane of the first hole, a length of the first hole is smaller than a thickness in the axial direction of the rotation direction engaging part, an inner face of the first hole can be engaged with a side face of the rotation direction engaging part in the rotation direction, and at least a part of the step part can be engaged with, in the axial direction, at least a part of an end face of the engaging flange part at a side of the rotation direction engaging part in the axial direction.

According to the invention, it is possible to realize the connection releasing structure in which the lock pin can be rotated by only one operator.

### Advantage of the Invention

According to the invention, it is possible to realize a lock pin, a lock pin rotating tool, and a connection releasing structure in which the lock pin can be rotated by only one operator, and hence, the number of working steps can be reduced.

### Brief Description of the Drawings

[FIG. 1] Fig. 1 is a schematic sectional view showing a connecting structure for connecting a rolling roll with a coupling in an embodiment according to the invention.
[FIG. 2] Fig. 2 is a schematic sectional view of the connecting structure taken along a plane including a center axis of a lock pin and a direction perpendicular to an axial direction of the rolling roll.
[FIG. 3] Fig. 3 is a perspective view of the lock pin.
[FIG. 4] Fig. 4 is a perspective view showing an end part of the lock pin at a side of a head part thereof, showing a region around an engaging projection of the lock pin.
[FIG. 5] Fig. 5 is a sectional view of a rotation direction engaging part taken along a plane perpendicular to an axial direction.
[FIG. 6] Fig. 6 is a perspective view of the end part of the lock pin at the side of the head part, as seen from a different direction from in Fig. 4.
[FIG. 7] Fig. 7 is a schematic view for explaining a rotation restricting structure of the lock pin for restricting the rotation of the lock pin with respect to the coupling.
[FIG. 8] Fig. 8 is a view showing a lock pin rotating tool which is used for rotating the lock pin.
[FIG. 9] Fig. 9 is a schematic view of an engaging projection of the lock pin in a modified example, as seen from outside in the axial direction.

### Mode for Carrying Out the Invention

Now, the invention will be described in detail, referring to embodiments as shown in the drawings.

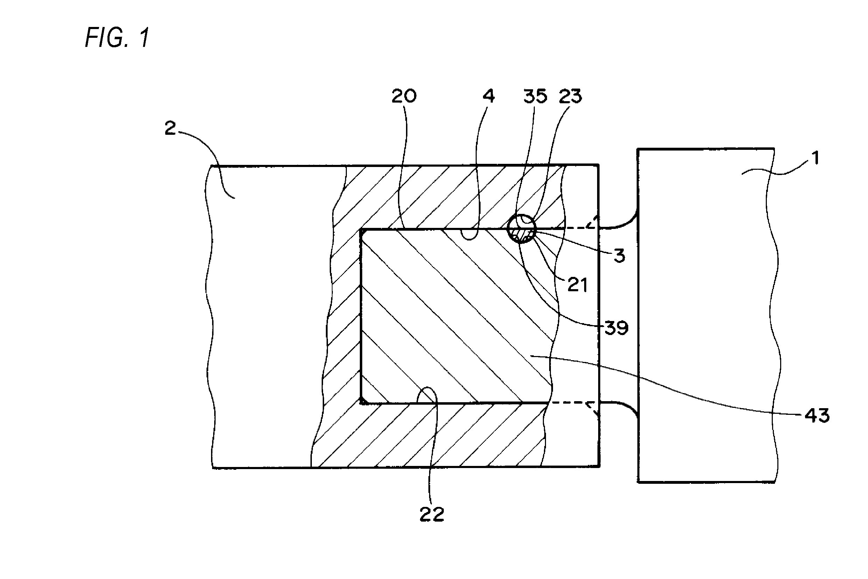

Fig. 1 is a schematic sectional view showing a connecting structure for connecting a rolling roll 1 with a coupling 2 in an embodiment according to the invention.

This connecting structure includes the rolling roll 1, the coupling 2, and a lock pin 3. The rolling roll 1 has a roll neck part 43, while the coupling 2 has a roll neck engaging hole 41. The roll neck part 43 is engaged with the roll neck engaging hole 41. As shown in Fig. 1, the rolling roll 1 has a groove 21 which is formed on an outer peripheral face 20 of the roll neck part 43 and extended in a direction perpendicular to an axial direction of the rolling roll 1. The coupling 2 has a groove 23 which is formed on an inner peripheral face 22 of the roll neck engaging hole 41 and extended in a direction perpendicular to the axial direction.

As shown in Fig. 1, the groove 21 in the rolling roll 1 and the groove 23 in the coupling 2 respectively have a substantially semicircular shape in section, and they are mated with each other thereby to form a lock pin inserting hole 39 in a substantially circular shape. In the sectional view in Fig. 1, the lock pin inserting hole 39 is extended in a tangential direction of the outer peripheral face 20 of the roll neck part 43. The lock pin 3 is inserted into the lock pin inserting hole 39. The lock pin 3 has a function of preventing relative movement of the rolling roll 1 with respect to the coupling 2 in the axial direction of the rolling roll 1. Moreover, the lock pin 3 has a cutout part 35. The function of the lock pin 3 and structure of the cutout part 35 will be fully described below.

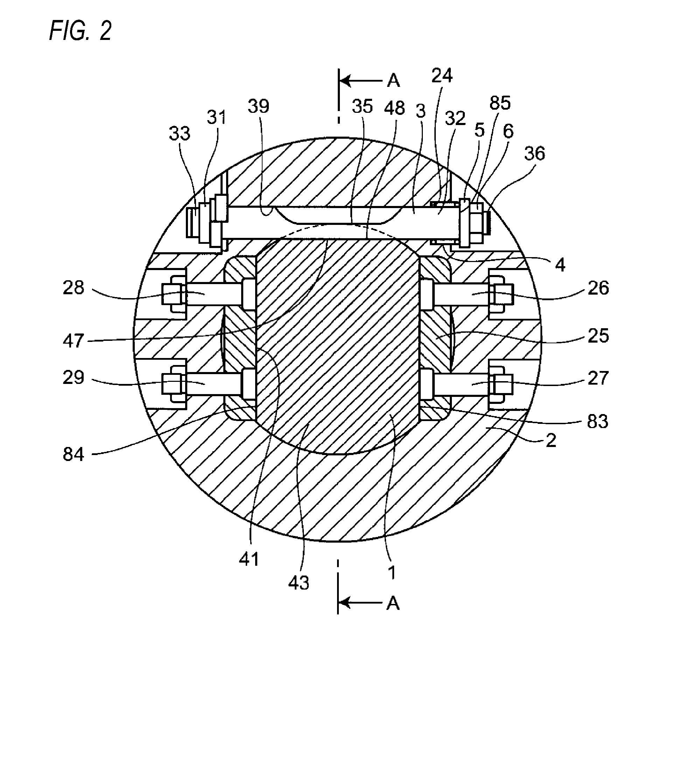

Fig. 2 is a schematic sectional view of the connecting structure taken along a plane including a center axis of the lock pin 3 and a direction perpendicular to an axial direction of the rolling roll 1.

As shown in Fig. 2, in addition to the rolling roll 1, the coupling 2 and the lock pin 3, this connecting structure includes a spring member 4, a washer 5, and a nut 6. The lock pin 3 has a head part 31, a shaft 32 which is connected to the head part 31, and an engaging projection 33. The shaft 32 has the cutout part 35 and a screw part 36. The screw part 36 is positioned in a tip end part of the shaft 32 at an opposite side to the head part 31. The cutout part 35 is positioned between the head part 31 and the screw part 36. The cutout part 35 has a laterally symmetrical dish-like shape in section, as shown in Fig. 2.

The spring member 4 is so arranged as to surround the shaft 32. An end part of the lock pin inserting hole 39 in the coupling 2 at a side where the shaft 32 is engaged has a step part 24 which is extended outward in a radial direction. An inner diameter of an inner peripheral face of the lock pin inserting hole 39 which is positioned outward than the step part 24 in the axial direction is formed larger than that of the inner peripheral face which is positioned inward than the step part 24 in the axial direction. In this manner, a part of the spring member 4 surrounding the shaft 32 can be contained inside the inner peripheral face having the larger diameter, thereby enabling one end part of the spring member 4 to obtain a repulsive force from the step part 24.

As shown in Fig. 2, the washer 5 is so arranged as to surround the shaft 32, and butted against the other end part of the spring member 4. Moreover, the nut 6 is screwed on the screw part 36 of the shaft 32 thereby to tighten the washer 5 toward the head part 31. In Fig. 2, reference numeral 25 represents a liner, and reference numerals 26 to 29 represent screws, although not specifically described. The liner 25 is secured with the screws 26 to 29. By clamping flat faces 83, 84 of the roll neck part 43 which are substantially parallel to each other by means of the liner 25, the rolling roll 1 and the roll neck engaging hole 41 are made concentric. It is to be noted that the schematic sectional view in Fig. 1 corresponds to a sectional plane taken along a line A-A in Fig. 2, which is, a line vertically bisecting the cutout part 35 having the laterally symmetrical dish-like shape.

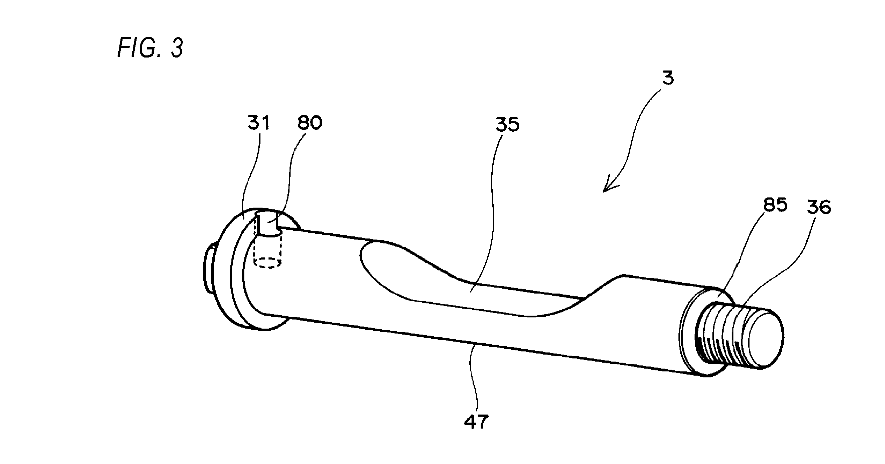

Fig. 3 is a perspective view of the lock pin 3.

As shown in Fig. 3, the lock pin 3 has a step part 85 between the cutout part 35 and the screw part 36. Referring to Fig. 2, the washer 5 is pressed with the nut 6 against this step part 85. Moreover, the lock pin 3 is provided with a pin inserting hole 80 near the head part 31, as shown in Fig. 3. Function of this pin inserting hole 80 will be fully described below.

The above described connecting structure can be formed, for example, in the following manner. Specifically, in a state where the cutout part 35 of the lock pin 3 is directed to the roll neck engaging hole 41, the lock pin 3 is inserted into the lock pin inserting hole 39. Thereafter, the roll neck part 43 of the rolling roll 1 is inserted into the roll neck engaging hole 41. Finally, by rotating the lock pin 3 in a manner fully described below, a peripheral part 47 (See Figs. 2 and 3) of the lock pin 3 is engaged with an engaging groove 48 (See Fig. 2) in the roll neck part 43. As the results, movement of the roll neck part 43 in the axial direction is restricted, and thus, the connecting structure is formed.

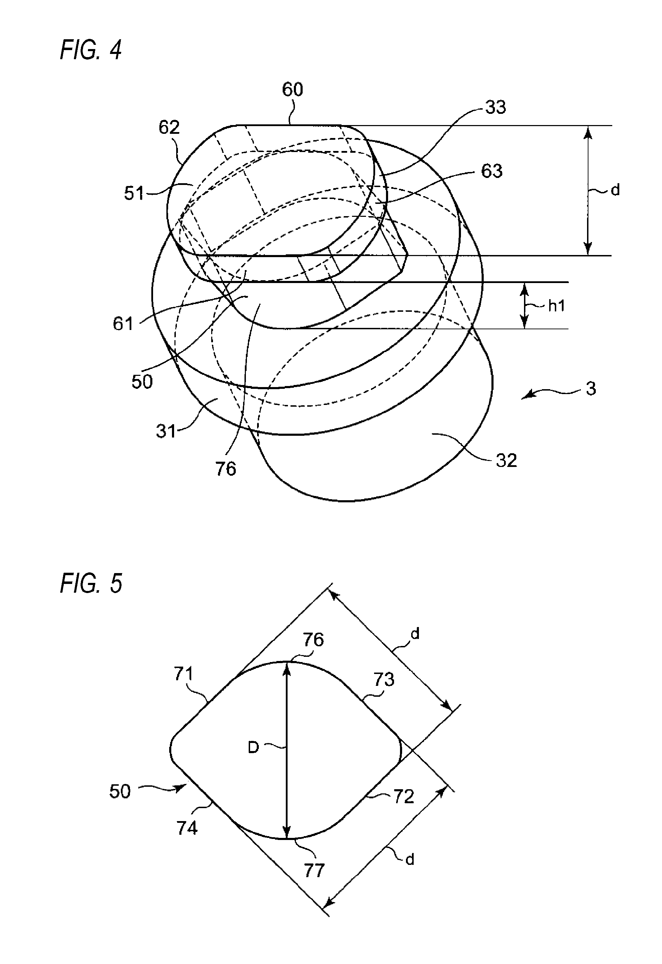

Fig. 4 is a perspective view showing the end part of the lock pin 3 at the side of the head part 31, which shows a region around the engaging projection 33 of the lock pin 3.

The engaging projection 33 includes a rotation direction engaging part 50 and an engaging flange part 51. The rotation direction engaging part 50 is connected to the head part 31, and the engaging flange part 51 is connected to the rotation direction engaging part 50.

As shown in Fig. 4, the engaging flange part 51 has an end face in the axial direction having a shape of a running track, and is formed in a substantially oblong shape. The engaging flange part 51 has a first side face 60 and a second side face 61 which are substantially parallel to each other. The first and second side faces 60, 61 are substantially the same, and have a rectangular shape. The first side face 60 is substantially completely overlapped on the second side face 61 in a normal direction of the first side face 60. A distance between the first side face 60 and the second side face 61 (a width between two faces) is set to be d[cm].

The side face of the engaging flange part 51 includes the first and second side faces 60, 61, a first curved face 62, and a second curved face 63. The first curved face 62 exists between one end of the first side face 60 and one end of the second side face 61, and the second curved face 63 exists between the other end of the first side face 60 and the other end of the second side face 61.

The rotation direction engaging part 50 is positioned in a region where the engaging flange part 51 passes, when the engaging flange part 51 moves toward the shaft 32 in the axial direction. Fig. 5 is a sectional view of the rotation direction engaging part 50 taken along a plane perpendicular to the axial direction. As shown in Fig. 5, the rotation direction engaging part 50 has a sectional shape of parallelogram in which four edges have substantially the same length. Accurately, the rotation direction engaging part 50 has such a shape that a prism having a sectional shape of parallelogram in which four edges have substantially the same length is tapered at its respective four corners. In short, the rotation direction engaging part 50 has a substantially lemon-like shape in section.

The rotation direction engaging part 50 has a first side face 71 and a second side face 72 which are positioned substantially in parallel with each other and separated by a distance d[cm] which is substantially equal to the distance d[cm] between the first side face 60 and the second side face 61 of the engaging flange part 51. Moreover, the rotation direction engaging part 50 has a third side face 73 and a fourth side face 74 which are positioned substantially in parallel with each other and separated by a distance d[cm] which is substantially equal to the distance d[cm] between the first side face 60 and the second side face 61 of the engaging flange part 51.

As shown in Fig. 4, a sectional plane of the rotation direction engaging part 50 taken along a plane perpendicular to the axial direction is smaller than a sectional plane of the engaging flange part 51 taken along a plane perpendicular to the axial direction. Moreover, referring to Figs. 4 and 5, a position in a rotation direction (phase) of a corner part 76 out of four corner parts of the rotation direction engaging part 50 substantially coincides with a position in the rotation direction (phase) of a center of the first side face 60 of the engaging flange part 51. Further, a position in the rotation direction (phase) of the other corner part 77 out of the four corner parts of the rotation direction engaging part 50 substantially coincides with a position in the rotation direction (phase) of a center of the second side face 61 of the engaging flange part 51.

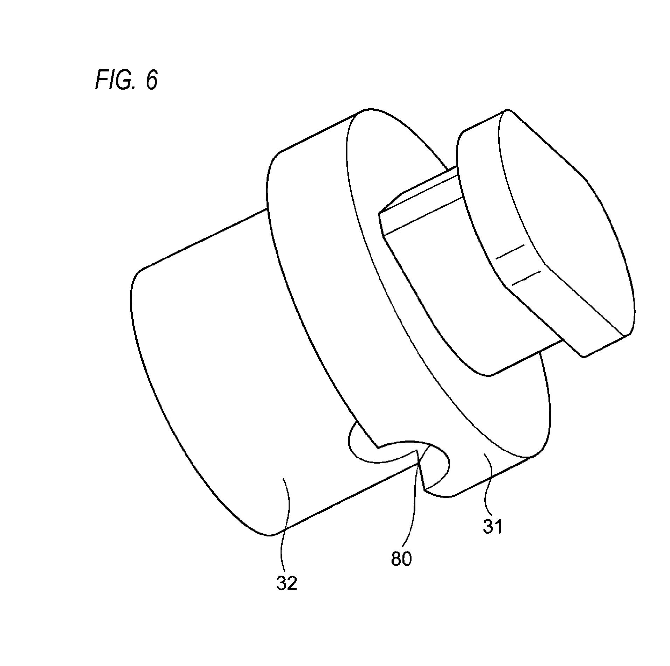

Fig. 6 is a perspective view of the end part of the lock pin 3 at the side of the head part 31, as seen from a different direction from in Fig. 4.

As shown in Fig. 6, the end part of the lock pin 3 at the side of the head part 31 has the pin inserting hole 80 which is provided across the head part 31 and the shaft 32. A rotation restricting pin (not shown) of the lock pin 3 is adapted to be inserted into this pin inserting hole 80.

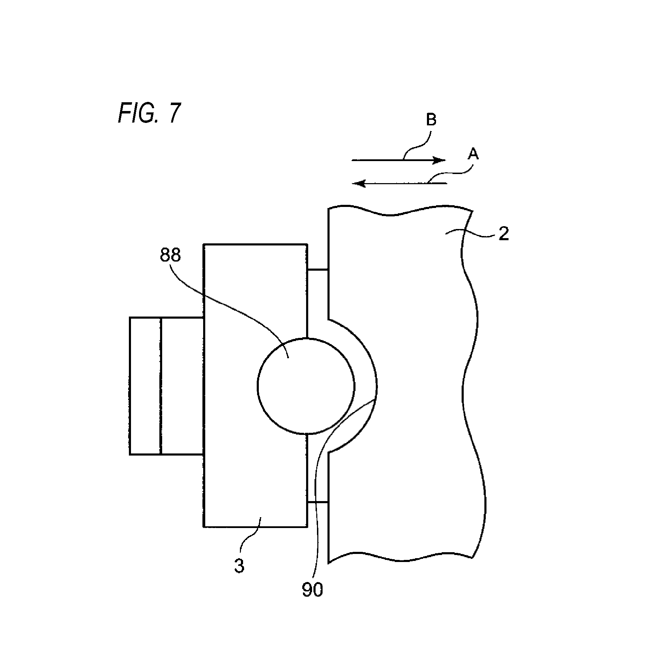

Fig. 7 is a schematic view for explaining a rotation restricting structure for restricting the rotation of the lock pin 3 with respect to the coupling 2. In Fig. 7, reference numeral 88 represents the pin which is inserted into the pin inserting hole 80 which is shown in Fig. 6.

As shown in Fig. 7, the coupling 2 has a cutout 90 in a substantially semicircular shape which substantially corresponds to a curvature of a head part of the pin 88. In this embodiment, by moving the lock pin 3 with respect to the coupling 2 in the axial direction of the lock pin 3, that is, the direction of an arrow mark A in Fig. 7, the head part of the pin 88 which has been inserted into and engaged with the cutout 90 can be detached from the cutout 90 thereby to release the rotation restriction of the lock pin 3.

On the other hand, referring to Fig. 2, in case where a force is not applied to the lock pin 3, the head part of the pin 88 is engaged with the cutout 90 due to a force which is applied to the washer 5 by the spring 4 in the axial direction, that is, a direction of an arrow mark B in Fig. 7, thereby to prevent the lock pin 3 from rotating with respect to the coupling 2. In this manner, in the connecting structure, the movement of the roll neck part 43 in the axial direction is restricted.

There are formed the two cutouts 90 near the lock pin inserting hole 39 in the coupling 2, at two positions having a phase difference of 180 degree. Accordingly, the lock pin 3 can prevent the roll neck part 43 from rotating between an axial direction restricting position where the movement of the roll neck part 43 in the axial direction with respect to the coupling 2 is restricted and a shaft insertion allowing position where the roll neck part 43 can be inserted into the coupling 2.

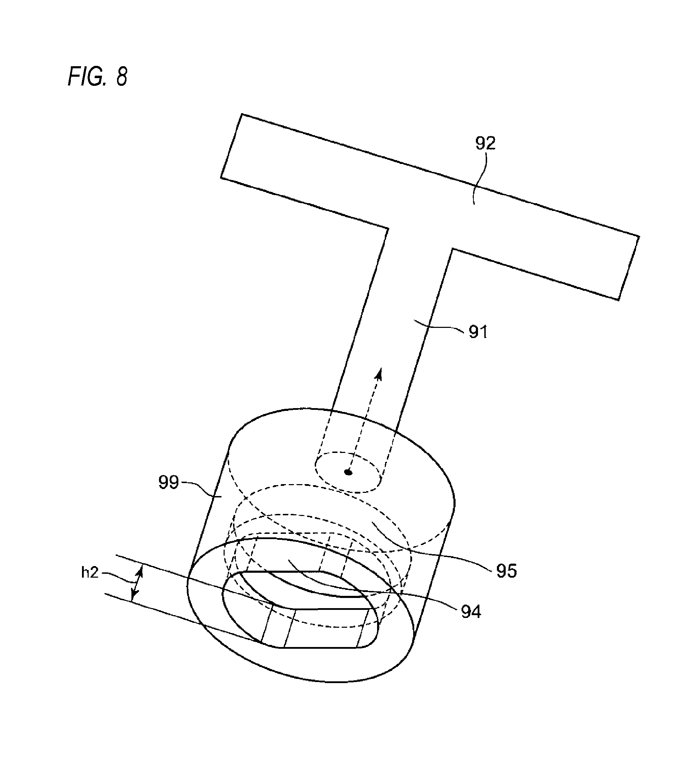

Fig. 8 is a view showing a lock pin rotating tool which is used for rotating the lock pin 3.

This lock pin rotating tool (hereinafter referred to simply as "the tool") has a body part including, for example, a columnar part 99, a shaft part 91, and a torque applying part 92. The shaft part 91 is connected to one end of the columnar part 99, and the torque applying part 92 is connected to an end of the shaft part 91 at an opposite side to the columnar part 99. The columnar part 99 and the shaft part 91 are substantially aligned in the axial direction. Moreover, the torque applying part 92 is extended in a direction perpendicular to an extending direction of the shaft part 91. By rotating the torque applying part 92, it is possible to rotate the columnar part 99.

The columnar part 99 is provided with a hole which opens to an end face thereof at an opposite side to the shaft part 91 in the axial direction. Specifically, the columnar part 99 has a first hole 94 and a second hole 95. The first hole 94 opens to the end face of the columnar part 99 in the axial direction.

The first hole 94 has a sectional plane substantially corresponding to the end face in the axial direction of the engaging flange part which is represented by reference numeral 51 in Fig. 5 (the sectional plane which is slightly larger than the end face in the axial direction of the engaging flange part 51), so that the engaging flange part 51 can pass through the first hole 94. The second hole 95 is continued from the first hole 94 via a step part. An inner peripheral face of the second hole 95 is continued from an inner peripheral face of the first hole 94 via the step part which is extended outward in a radial direction from the inner peripheral face of the first hole 94. The second hole 95 has a larger sectional plane than the sectional plane of the first hole 94.

An axial length h2 [cm] of the first hole 94 is smaller than an axial length h1 [cm] of the rotation direction engaging part which is represented by reference numeral 50 in Fig. 4. The inner peripheral face of the first hole 94 is adapted to be engaged with the side face of the rotation direction engaging part 50 in a rotation direction. Specifically, the first hole 94 has the sectional plane which is substantially equal to the end face in the axial direction of the engaging flange part 51, and two side faces having a width d[cm] between the two faces corresponding to the first and second side faces of the engaging flange part 51. On the other hand, the rotation direction engaging part 50 also has the first side face 71 and the second side face 72 having the width d[cm] between them, and the third side face 73 and the third side face 74 having the width d[cm] between them. When the two side faces of the first hole 94 having the width d[cm] between them are so arranged as to clamp the first side face 71 and the second side face 72 of the rotation direction engaging part 50, or so arranged as to clamp the third side face 73 and the fourth side face 74 of the rotation direction engaging part 50, the tool can be engaged with the rotation direction engaging part 50 so as not to relatively move in the rotation direction with respect to each other.

As described above, when the engaging flange part 51 is moved toward the shaft 32 in the axial direction, the rotation direction engaging part 50 is positioned within the region where the engaging flange part 51 passes. Moreover, the sectional plane of the rotation direction engaging part 50 taken along the plane perpendicular to the axial direction is smaller than the sectional plane of the engaging flange part 51 taken along the plane perpendicular to the axial direction. Therefore, when a user pulls the tool in a state where the tool is engaged with the rotation direction engaging part 50 so as not to relatively move in the rotation direction with respect to each other, it is possible to frictionally engage, in the axial direction, a part of the step part between the first hole 94 and the second hole 95 with at least a part of the end face of the engaging flange part 51 at a side of the rotation direction engaging part 50 in the axial direction. In this manner, it is possible to engage the tool with the engaging flange part 51 in the axial direction.

Accordingly, when the user further pulls the tool, in a state where a part of the step part is engaged with, in the axial direction, at least a part of the end face of the engaging flange part 51 at the side of the rotation direction engaging part 50 in the axial direction, it is possible to release the rotation restriction of the lock pin 3, as described referring to Fig. 7. In this state, when the user rotates the torque applying part 92 (See Fig. 8), it is possible to rotate the lock pin 3.

According to the above described embodiment, after the rotation restriction is released by applying a force from the tool to the lock pin 3 in the axial direction, it is possible to rotate the lock pin 3, by applying a torque from the tool to the lock pin 3. Therefore, it is possible to rotate the lock pin 3 by only one operator, and hence, the number of working steps in engagement using the lock pin 3 can be reduced.

Moreover, according to the above described embodiment, when the two side faces of the first hole 94 corresponding to the first side face 60 and the second side face 61 of the engaging flange part 51 are so arranged as to clamp the first side face 71 and the second side face 72 of the rotation direction engaging part 50, or so arranged as to clamp the third side face 73 and the fourth side face 74 of the rotation direction engaging part 50, it is possible to engage the tool with the rotation direction engaging part 50 so as not to relatively move in the rotation direction with respect to each other. Then, by pulling the tool in this state, it is possible to frictionally engage, in the axial direction, a part of the step part with at least a part of the end face of the engaging flange part 51 at the side of the rotation direction engaging part 50 in the axial direction, thereby to release the rotation restriction of the lock pin 3. According to the above described embodiment, the lock pin 3 which can be rotated by only one operator, thus enabling the number of the working steps to be reduced, can be constructed in a simple structure. Moreover, according to the above described embodiment, it is possible to realize a connection releasing structure including the lock pin 3 and the tool, and enabling the lock pin 3 to be rotated by only one operator.

Moreover, according to the above described embodiment, the engaging flange part 51 has the substantially oblong shape, while the rotation direction engaging part 50 has the sectional shape of parallelogram in which the four edges have the substantially equal length. Therefore, a region of the tool to be frictionally engaged with the end face of the engaging flange part 51 at the side of the rotation direction engaging part 50 can be made larger, and hence, the engagement in the axial direction can be more reliably performed.

Moreover, according to the above described embodiment, the engaging projection 33 has only to be connected to the head part 31 of the lock pin 3. Therefore, it is possible to prevent the lock pin 3 from jumping out from the outer peripheral face of the coupling 2 outward in the radial direction. As the results, a swing diameter of the rotation will not be increased.

In the above described embodiment, the rotation restriction of the lock pin 3 is performed, by engaging the head part of the pin 88 which is fixed to the lock pin 3 with the cutout 90 in the coupling 2. However, according to the invention, it is also possible to perform the rotation restriction of the lock pin 3, by working a face of the head part of the lock pin at a side of a lock pin inserting member so as to form concaves and convexes alternately in a circumferential direction, and at the same time, working a face of the lock pin inserting member to be contacted with the face of the head part so as to form concaves and convexes to be engaged with the aforesaid concaves and convexes, and then, by engaging the concaves and convexes on the face of the head part with the concaves and convexes on the face of the lock pin inserting member. Moreover, in the above described embodiment, the rotation restriction of the lock pin 3 is performed by engaging the convex part of the lock pin 3 with the concave part of the coupling 2. However, according to the invention, it is also possible to perform the rotation restriction, by forming a concave part in the lock pin, and a convex part in the coupling, and then, by engaging the concave part in the lock pin with the convex part in the coupling. As described above, the rotation restricting mechanism may be in any structure, provided that relative rotation of the lock pin with respect to the lock pin inserting member can be prevented.

Moreover, according to the invention, the rotation restricting mechanism of the coupling need not be necessarily provided. Even though the rotation restricting mechanism is not provided, it is possible to make the lock pin so as not to be rotated by frictional force. In this case, by detaching the lock pin from the coupling, it is possible to cancel the frictional force.

Moreover, in the above described embodiment, the body part of the tool has a columnar shape. However, according to the invention, the body part of the tool may have any other shape such as a prism shape.

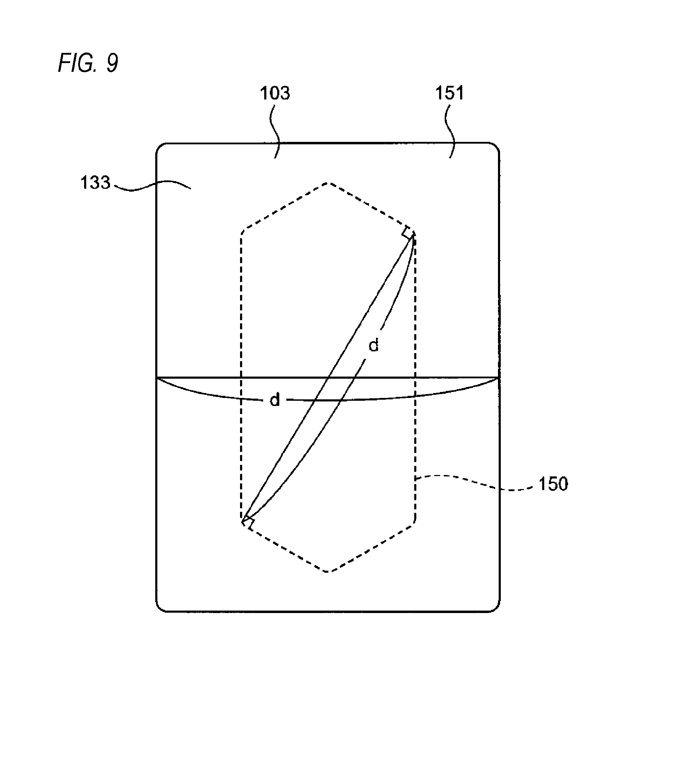

Moreover, in the above described embodiment, the engaging flange part 51 has a shape of a running track in section, while the rotation direction engaging part 50 has a substantially lemon-like shape in section (a shape of substantially parallelogram in section). However, according to the invention, as shown for example, in Fig. 9, that is, a schematic view of an engaging projection 133 of a lock pin 103 in a modified example, as seen from outside in the axial direction, it is possible to form an engaging flange part 151 in a substantially rectangular sectional shape, and to form a rotation direction engaging part 150 in a hexagonal sectional shape, in which a width between a pair of two faces is made shorter than in a regular hexagon. Then, centers of the two sectional shapes may be made aligned, and further, a width d [cm] of the substantially rectangular sectional shape may be made substantially equal to a width d[cm] between two longer faces of the hexagonal sectional shape.

In addition, according to the invention, the engaging projection may have any shape, provided that the engaging flange part has a first side face and a second side face which are substantially parallel to each other, and the rotation direction engaging part is positioned within a region where the engaging flange part passes, when the engaging flange part is moved in the axial direction toward the shaft, and at the same time, has a first side face and a second side face which are substantially parallel to each other, and separated from each other by a distance substantially equal to a distance between the first and second side faces of the engaging flange part, and that a sectional plane of the rotation direction engaging part taken along a plane perpendicular to the axial direction is smaller than a sectional plane of the engaging flange part taken along a plane perpendicular to the axial direction.

Moreover, according to the invention, the engaging flange part and the rotation direction engaging part need not necessarily have the side faces which are substantially parallel to each other. It would be sufficient that the engaging projection has a rotation direction engaging part which is connected to the head part and can be engaged in a rotation direction, and an engaging flange part which is connected to the rotation direction engaging part and can be engaged in an axial direction. Moreover, positions in the rotation direction engaging part to be engaged with the hole in the tool may be at two side faces which are opposed to each other in a substantially V-shape.

Further, the tool according to the invention is not limited to the above described embodiment. It would be sufficient that the tool has a first hole which has a sectional plane substantially corresponding to the end face in the axial direction of the engaging flange part, and the engaging flange part can pass through, and a second hole which has an inner peripheral face continued from an inner peripheral face of the first hole, via a step part extending outward in a radial direction from the inner peripheral face of the first hole, the second hole having a sectional plane which is larger than the sectional plane of the first hole, and a length of the first hole is smaller than a thickness in the axial direction of the rotation direction engaging part.

Still further, it would be sufficient that the connection releasing structure according to the invention includes the lock pin and the lock pin rotating tool for rotating the lock pin, wherein the tool includes a first hole which has a sectional plane substantially corresponding to the end face in the axial direction of the engaging flange part of the lock pin, and the engaging flange part can pass through, and a second hole which has an inner peripheral face continued from an inner peripheral face of the first hole, via a step part extending outward in a radial direction from the inner peripheral face of the first hole, the second hole having a sectional plane which is larger than the sectional plane of the first hole, a length of the first hole is smaller than a thickness in the axial direction of the rotation direction engaging part, an inner face of the first hole can be engaged with a side face of the rotation direction engaging part in the rotation direction, and at least a part of the step part can be engaged with, in the axial direction, at least a part of the end face of the engaging flange part at a side of the rotation direction engaging part in the axial direction.

Moreover, it is apparent that the lock pin according to the invention can be used for other purposes than the connecting mechanism for connecting the rolling roll of the rolling mill to the coupling which is connected to the drive shaft.

This application is based on Japanese Patent Application filed on August 31, 2012 (Japanese Patent Application No. 2012-192052), and Japanese Patent Application filed on July 9, 2013 (Japanese Patent Application No. 2013-143413), the contents of which are hereby incorporated by reference.

### Industrial Applicability

According to the invention, it is possible to realize the lock pin which can be rotated by only one operator thereby enabling the number of working steps to be reduced, the lock pin rotating tool, and the connection releasing structure.

### Description of the Reference Numerals and Signs

- 3, 103: Lock pin
- 31: Head part
- 32: Shaft
- 33, 133: Engaging projection
- 35: Cutout part
- 36: Screw part
- 50, 150: Rotation direction engaging part
- 51, 151: Engaging flange part
- 60: First side face of engaging flange part
- 61: Second side face of engaging flange part
- 71: First side face of rotation direction engaging part
- 72: Second side face of rotation direction engaging part
- 76: One of four corners of rotation direction engaging part
- 77: Another one of four corners of rotation direction engaging part
- 94: First hole of tool
- 95: Second hole of tool

## Claims

1. A lock pin comprising:
a head part;
a shaft which is continued from the head part, and which has a cutout part and a screw part which is positioned at a tip end side forward of the cutout part; and
an engaging projection which is continued from the head part at an opposite side to the screw part,
**characterized in that**
the engaging projection has:
a rotation direction engaging part which is connected to the head part, and which can be engaged in a rotation direction; and
an engaging flange part which is connected to the rotation direction engaging part, and which can be engaged in an axial direction.

2. The lock pin as claimed in claim 1, **characterized in that**
the engaging flange part has a first side face and a second side face which are substantially parallel to each other,
the rotation direction engaging part is positioned within a region where the engaging flange part passes, when the engaging flange part is moved in the axial direction toward the shaft, and has a first side face and a second side face which are substantially parallel to each other, and separated from each other by a distance substantially equal to a distance between the first and second side faces of the engaging flange part, and
a sectional plane of the rotation direction engaging part taken along a plane perpendicular to the axial direction is smaller than a sectional plane of the engaging flange part taken along a plane perpendicular to the axial direction.

3. The lock pin as claimed in claim 2, **characterized in that**
the engaging flange part has a substantially oblong shape, while the rotation direction engaging part has a sectional shape of parallelogram in which four edges have substantially equal length, and
a position of one of four corners of the rotation direction engaging part in the rotation direction substantially coincides with a position of a center of the first side face of the engaging flange part in the rotation direction, and a position of another one of the four corners of the rotation direction engaging part in the rotation direction substantially coincides with a position of a center of the second side face of the engaging flange part in the rotation direction.

4. A lock pin rotating tool for rotating the lock pin as claimed in any one of claims 1 to 3, the lock pin rotating tool **characterized by** comprising:
a body part; and
a torque applying part for rotating the body part in the rotation direction, wherein
the body part has:
a first hole which has a sectional plane substantially corresponding to an end face in the axial direction of the engaging flange part, and through which the engaging flange part can pass; and
a second hole which has an inner peripheral face continued from an inner peripheral face of the first hole, via a step part extending outward in a radial direction from the inner peripheral face of the first hole, the second hole having a sectional plane which is larger than the sectional plane of the first hole, and
a length of the first hole is smaller than a thickness in the axial direction of the rotation direction engaging part.

5. A connection releasing structure comprising: the lock pin as claimed in any one of claims 1 to 3; and a lock pin rotating tool for rotating the lock pin, the connection releasing structure **characterized in that**
the lock pin rotating tool includes:
a body part; and
a torque applying part for rotating the body part in the rotation direction,
the body part has:
a first hole which has a sectional plane substantially corresponding to an end face in the axial direction of the engaging flange part, and through which the engaging flange part can pass; and
a second hole which has an inner peripheral face continued from an inner peripheral face of the first hole, via a step part extending outward in a radial direction from the inner peripheral face of the first hole, the second hole having a sectional plane which is larger than the sectional plane of the first hole,
a length of the first hole is smaller than a thickness in the axial direction of the rotation direction engaging part,
an inner face of the first hole can be engaged with a side face of the rotation direction engaging part in the rotation direction, and
at least a part of the step part can be engaged with, in the axial direction, at least a part of an end face of the engaging flange part at a side of the rotation direction engaging part in the axial direction.
